# EUROPEAN PATENT SPECIFICATION

(11) **EP 3 838 535 B1**
(45) Date of publication and mention of the grant of the patent: **07.06.2023**
(21) Application number: 19383161.7
(22) Date of filing: 20.12.2019
(51) Int. Cl.: B29B 15/08

(54) **PROCESS FOR THE PRODUCTION OF FEATHER-BASED THERMOPLASTIC MATERIALS**
VERFAHREN ZUR HERSTELLUNG VON FEDERBASIERTEN THERMOPLASTMATERIALIEN
PROCÉDÉ DE PRODUCTION DE MATÉRIAUX THERMOPLASTIQUES À BASE DE PLUMES

(43) Date of publication of application: 23.06.2021
(73) Proprietor: Fundación Cidetec, 20014 Donostia-San Sebastián (ES)
(72) Inventor: Montes Perez, Sara, 20014 DONOSTIA-SAN SEBASTIÁN (ES); Aranberri Askargorta, Ibon, 20014 DONOSTIA-SAN SEBASTIÁN (ES); Muñoz Ramos, Virginia, 20014 DONOSTIA-SAN SEBASTIÁN (ES); Niermann, Carsten, 47877 WILLICH (DE); Michels, Carmen, 47877 WILLICH (DE); Nordlander, Julia, 891 32 ÖRNSKÖLDSVIK (SE); Johnson, Karin, 89340 KÖPMANHOLMEN (SE)
(74) Representative: ZBM Patents - Zea, Barlocci & Markvardsen

(56) References cited:
- EP-A1- 0 914 381
- EP-A1- 3 385 055
- EP-B1- 0 914 381
- WO-A1-2017/221015
- US-A- 2 474 339
- US-A- 3 624 830
- US-A- 5 269 992
- IBON ARANBERRI ET AL: "Fully Biodegradable Biocomposites with High Chicken Feather Content", POLYMERS, vol. 9, no. 11, 9 November 2017 (2017-11-09), page 593, XP055667381, DOI: 10.3390/polym9110593
- WEI ZHAO ET AL: "Sustainable and practical utilization of feather keratin by an innovative physicochemical pretreatment: high density steam flash-explosion", GREEN CHEMISTRY, vol. 14, no. 12, 1 October 2012 (2012-10-01), pages 3352-3360, XP055529986, GB ISSN: 1463-9262, DOI: 10.1039/c2gc36243k

## Description

The project leading to this application has received funding from the European Union's Horizon2020 research and innovation programme under grant agreement No 723268.

### Technical Field

The present invention belongs to the field of manufacturing thermoplastic materials. In particular, the invention relates to a process for the preparation of a thermoplastic material comprising a thermoplastic matrix reinforced with processed feathers.

### Background Art

There is currently a growing interest in the research and development of new materials obtained from natural resources as new alternatives to decrease or even replace petroleum-derived plastics.

In this sense, biopolymers from agricultural sources or from the agricultural and livestock waste stream are viewed as a viable alternative to petroleum-based raw materials if it is possible to process them through suitable conversion methods.

It is known that the poultry industry generates a huge amount of waste each year and, at present, the majority of poultry feathers are disposed of in landfills or incinerated, and a minor part converted into low-nutritional-value animal food. The current solutions do not exploit the whole potential that this proteinaceous material represents, and more importantly, the management of environmental and health concerns as overall waste rises.

Feather keratin is a natural resource that is being widely studied nowadays. As an illustrative example, chicken feathers, which are composed of 90% keratin, are abundant, cheap, biodegradable and have low density. Due to these unique properties, chicken feather fibers have been studied as reinforcement or filler of plastics.

In this regard, the prior art has already disclosed processes for the preparation of these feather-based plastic materials. For example, it has been described that a combination of mechanical and chemical treatments, such as alkaline hydrolysis, allows the incorporation of feathers into polymeric matrices by discontinuous mixing. Unfortunately, this method does not allow obtaining feather-based materials using a scalable continuous process, such as extrusion.

Thus, current strategies for the valorization of feathers using extrusion process include: i) the disruption of disulphide bonds by chemical means or/and the addition of hydrophilic plasticizers, or ii) the mechanical treatment of feathers to break the quaternary structure of keratin followed by a premixing step with other additives or even polymers. This second strategy could also involve a previous step of separation of the feather parts (quills and barbs).

The first strategy results in a keratinous matrix and, therefore, in a material with poor mechanical properties, difficult to further processing and limited applications. The second one leads to the conversion of feathers into very light fibrous materials. The lightness and fluffiness of feathers make very difficult their feeding during the extrusion process which often leads to the unsuitable discontinuous incorporation of the feathers into the extruder and thus the inhomogeneous composition of the resulting compound or even the complete obstruction of the extruder. In both cases, it is required several previous mixing steps of feathers with other additives or polymers prior to the extrusion. These steps make the process less scalable.

Furthermore, these strategies are expensive, and the use of chemical compounds makes them less sustainable from the environmental point of view. Methods disclosing steps b) to d) of claim 1 of this patent but not disclosing step a) are known from documents WO 2017/221015 A1, EP 3 385 055 A1 and EP 0 914 381 A1. Further, such a method is disclosed in the article "Fully Biodegradable Biocomposites with High Chicken Feather Content" that was published in Volume 9, No 11 of "Polymers". The Publication WEI ZHAO ET AL: "Sustainable and practical utilization of feather keratin by an innovative physicochemical pretreatment: high density steam flash-explosion",GREEN CHEMISTRY, vol. 14, no. 12, ISSN: 1463-9262 discloses a steam explosion method for allowing extraction of kreatin or to produce animal food. This paper is evidence that the properties of feathers change when subjected to steam explosion.

Therefore, a need remains for providing a process for preparing feather-based thermoplastic materials by extrusion that overcomes the problems reported in the prior art.

### Summary of Invention

The present inventors have developed an efficient, simple and environmentally-friendly process for producing thermoplastic materials reinforced with processed feathers.

Surprisingly, the inventors have found that when whole feathers were subjected to a particular combination of steps including steam explosion, drying, and fragmenting, the resulting processed feather product presented a consistency and density that made it highly suitable to be extruded with a thermoplastic matrix.

This was highly unexpected in view of the prior art.

On one hand, it was stablished as a general rule that the use of plasticizers or solvents, among others, was essential to efficiently extrude feathers with thermoplastic matrices.

Unfortunately, in this case feather is not acting as filler but as the matrix and, therefore, the material obtained is a keratinous matrix with poor mechanical properties and limited applications. In addition, this strategy needs the utilization of chemical compounds.

On the other hand, some of the known processes of the prior art also require the separation and classification of the different parts of the feathers previous to a premixing step before the extrusion process, which make them unfit for industrial application.

Therefore, the process provided by the invention allows obtaining feather-reinforced thermoplastic materials in an environmentally-friendly (avoiding the use of contaminant reagents), simple (reducing the number of steps), and cost-effective manner.

Thus, in a first aspect, the invention provides a process for the production of a feather-based thermoplastic material comprising the following steps in the specified order: (a) subjecting feathers to steam explosion, (b) drying the exploded feathers resulting from step (a), (c) fragmenting the dried feathers resulting from step (b), and (d) incorporating by extrusion the feather fragments resulting from step (c) into a thermoplastic matrix.

The particular combination of steps of the process of the invention allows the generation of materials with high feather loadings. In particular, the feather-based materials of the invention contain very small fibrous feather fragments with higher apparent density compared to non-treated or ground feathers - provided by the combination of steam explosion, drying, and fragmenting- which are homogeneously distributed in the thermoplastic polymer -provided by the extrusion step.

In addition to such homogenous distribution, the extruded thermoplastic material reinforced with feather fibers resulting from the process of the invention is also characterized by the possibility of adding high loads of feather fibers, representing up to 50 % of the dry weight of the final material. The processes disclosed in the prior art are only capable of reaching such high loadings of feathers when they are incorporated into the polymer by means different from extrusion, such as discontinuous mixing, which is not a scalable process for thermoplastic compounds.

Thus, in a second aspect, the invention provides an extruded feather-based thermoplastic material obtainable by the process as defined in the first aspect.

In a third aspect, the invention provides an article comprising an extruded feather-based thermoplastic material as defined in the second aspect.

### Detailed description of the invention

All terms as used herein in this application, unless otherwise stated, shall be understood in their ordinary meaning as known in the art. Other more specific definitions for certain terms as used in the present application are as set forth below and are intended to apply uniformly through-out the specification and claims unless an otherwise expressly set out definition provides a broader definition.

As used herein, the indefinite articles "a" and "an" are synonymous with "at least one" or "one or more." Unless indicated otherwise, definite articles used herein, such as "the" also include the plural of the noun.

For the purposes of the invention, any ranges given include both the lower and the upper end-points of the range. Ranges given, such as temperatures, times, and the like, should be considered approximate, unless specifically stated.

The invention provides in a first aspect a process for the production of a feather-based thermoplastic material comprising the steps of (a) subjecting feathers to steam explosion, (b) drying the exploded feathers resulting from step (a), (c) fragmenting the exploded feathers resulting from step (b), and (d) incorporating by extrusion the feather fragments resulting from step (c) into a thermoplastic matrix.

As used herein, the term "feather" refers to an integumentary appendage of an avian species. As used herein, the term "avian species" includes, but is not limited to, chicken, turkey, pigeon, dove, duck, geese, pheasant, waterfowl, emu, Guinea fowl, ostrich, and quail. Preferably, the feathers used in the present invention are from poultry (i.e., chicken or turkey). The term "feather" is meant to encompass primary feathers, secondary feathers, tail feathers, contour feathers, down feathers, filoplumes, semi-plume feathers, and bristle feathers. A typical avian feather has a central shaft or rachis to which two vanes are attached on either side. The vanes are formed of barbs, barbules (i.e., extensions from the barbs), and barbicels (i.e., hooks which interlock to 18 hold barbules together). The process of the present invention can be carried out with whole feathers but also with any portion of the feathers. Moreover, the process of the invention can be carried out with mixtures of feathers from different avian species. In a particular embodiment of the first aspect of the invention, optionally in combination with any of the embodiments provided below, the feathers are from chicken, turkey, pigeon, dove, duck, geese, pheasant, waterfowl, emu, Guinea fowl, ostrich, quail, and mixtures thereof. In another particular embodiment, the feathers are whole feathers. In another particular embodiment, the feathers are whole feathers from chicken.

The thermoplastic matrix comprises one or more thermoplastic polymers. The skilled person can routinely prepare a thermoplastic matrix comprising two or more thermoplastic polymers, such as by mere mixing.

The term "thermoplastic polymer" refers to a polymer which becomes pliable or moldable above a certain temperature and returns to a solid state upon cooling. Illustrative, but not limiting, list of thermoplastic polymers that may be used in the process of the invention includes polyvinyl halides, polyacetal, polyacrylics, polyalkylenes, polyalkenylenes, polyalkynylenes, polyamic acids, polyamides, polyamines, polyanhydrides, polyarylenealkylenes, polyarylenes, polyazomethines, polybenzimidazoles, polybenzothiazoles, polybenzyls, polycarbodiimides, polycarbonates, polycarbones, polycarboranes, polycarbosilanes, polycyanurates, polydienes, polyester-polyurethanes, polyesters, polyetheretherketones, polyether-polyurethanes, polyethers, polyhydrazides, polyimidazoles, polyimides, polyketones, polyolefines, polyoxyalkylenes, polyoxyphenylenes, polyphenyls, polyphosphazenes, , polypyrrones, polyquinolines, polyquinoxalines, polysilanes, polysilazanes, polysiloxanes, polysilsesquioxanes, polysulfides, polysulfonamides, polysulfones, polythiazoles, polythiomethylenes, polythiophenylenes, polyureas, polyurethanes, polyvinyl acetals, polyvinyl butyrals, polyvinyl formals, polyvinyl alkanoates, vinyl polymers, natural polymers, and mixtures thereof. The skilled person in the art, making use of their general knowledge, can easily identify the polymer(s) which are thermoplastic and hence can be used as thermoplastic matrix.

In the present invention, "steam explosion" refers to a process where pressurized steam at high temperature is injected into a reactor filled with feathers to subsequently reduce the pressure in an abrupt manner thereby causing the feathers to undergo an explosive decompression where their structure is disrupted.

The expression "fragmenting the dried feathers" refers to the fragmentation of the feathers to small particles (the so-called "feather fragments"). The fragmentation can be performed by any conventional technique such as grinding, milling, crushing, cutting, chopping, or shredding. Independently of the technique selected to perform the fragmentation, the resulting fragments can have many shapes, for instance they can be fibrous or spherical in appearance. As used herein, the term "size" refers to a characteristic physical dimension. For example, in the case of a feather fragment that is substantially fibrous, the size corresponds to the length of the fibrous fragment. On the other hand, in the case of a feather fragment that is substantially spherical, the size of the fragment corresponds to the diameter of the fragment. When referring to a set of fragments as being of a particular size, it is contemplated that the set can have a distribution of sizes around the specified size. Thus, as used herein, a size of a set of fragments can refer to a mode of a distribution of sizes, such as a peak size of the distribution of sizes. In addition, when not perfectly spherical, the diameter is the equivalent diameter of the spherical body including the object. This diameter is generally referred as the "hydrodynamic diameter", which measurements can be performed using a Wyatt Möbius coupled with an Atlas cell pressurization system or Malvern. Field-emission scanning electron microscopy (FE-SEM) or optical microscopy images do also give information regarding diameters. Thus, in one embodiment, the size of the fragments is determined by optical microscopy or field-emission scanning electron microscopy (FE-SEM). In a more particular embodiment, the size of the fragments is determined by field-emission scanning electron microscopy (FE-SEM).

"Extrusion" refers to the process whereby the thermoplastic matrix and the feather fragments are mixed, heated, melted, compressed, and pumped through a shaped die to form a continuous stream of product of the desired cross-sectional shape. With the extrusion it is achieved the homogenous distribution of the feather fragments into the thermoplastic matrix. The extrusion is performed in an extruder and the skilled person only has to follow the instructions of the manufacturer to appropriately perform the extrusion. The adjustment of any of the parameters requested by the extruder forms part of the routine exercise of the skilled in the art, making use of their general knowledge and instructions of the manufacturer. It is also well known in the art that, among other types, twin-screw extruders are used for thermoplastic compounds preparation. In another particular embodiment, optionally in combination with any of the embodiments provided above or below, the extrusion in step (d) is carried out with a twin-screw extruder.

In a particular embodiment of the process of the first aspect of the invention, optionally in combination with any of the embodiments provided above or below, the dried feathers resulting from step (b) contain a moisture content equal to or lower than 30 % w/w. In a more particular embodiment, the moisture content of the dried feathers is equal to or lower than 29 % w/w, 28 % w/w, 27 % w/w, 26 % w/w, 25 % w/w, 24 % w/w, 23 % w/w, 22 % w/w, 21 % w/w, 20 % w/w, 19 % w/w, 18 % w/w, 17 % w/w, 16 % w/w, 15 % w/w, 14% w/w, 13 % w/w, 12 % w/w, 11 % w/w, 10 % w/w, 9 % w/w, 8 % w/w, 7 % w/w, 6 % w/w, 5 % w/w, 4 % w/w, 3 % w/w, 2 % w/w, 1 % w/w, 0.8 % w/w, 0. 6 % w/w, 0.4 % w/w, 0.2 % w/w, or 0.1 % w/w. It is preferred to dry the exploded feathers to moisture contents close to 0 % w/w in order to facilitate the fragmentation of step (c) and also avoid the growth of microorganisms.

As used herein, "moisture content" refers to the percentage ratio of the weight of free water present in the material to the total weight of the material. For instance, a 50 % w/w moisture content means that a material of 100 g contains 50 g of water. There are several techniques known in the art which can be used to measure the moisture content of materials, such as oven-drying process, thermogravimetric analysis, or electrical contact hygrometer. Thus, in a particular embodiment of the process of the first aspect, the moister content is determined by thermogravimetric analysis.

As used herein, the term "% w/w" or "percentage by weight" of a component refers to the weight amount of the single component relative to the total weight of the material or, if specifically mentioned, of another component.

The drying step can be performed using any conventional technique, such as oven. There is no technical restriction when selecting the drier.

The time required to achieve the desired end moisture content depends, among others, on the feather material resulting from the explosion and the temperature of the drier. Hence, the drying can be performed, for example, at 80-120 °C in a period of time comprised from 2 to 20 hours, from 4 h to 12 h, from 6 h to 10 h, or 8 h. In one embodiment of the first aspect of the invention the drying step is performed for 8 h at 105 °C.

In a particular embodiment of the process of the first aspect of the invention, optionally in combination with any of the embodiments provided above or below, the feather fragments resulting from step (c) have a fragment size from 1 µm to 5 mm. In a more particular embodiment, the feather fragments have a fragment size from 5 µm to 1 mm. In an even more particular embodiment, the feather fragments have a fragment size from 5 µm to 500 µm. The size of the fragments can be determined by microscopy, more particularly by electron microscopy.

In a particular embodiment of the process of the first aspect of the invention, optionally in combination with any of the embodiments provided above or below, the fragmenting step (c) is carried out by grinding. In a more particular embodiment, the grinding is performed with a hammer mill. In an even more particular embodiment, the grinding is performed with a hammer mill with a mesh size of from 0.1 mm to 0.5 mm.

In a particular embodiment of the process of the first aspect of the invention, optionally in combination with any of the embodiments provided above or below, the thermoplastic polymer is a thermoplastic homopolymer or a thermoplastic copolymer.

In a particular embodiment of the process of the first aspect of the invention, optionally in combination with any of the embodiments provided above or below, the thermoplastic matrix comprises one or more thermoplastic homopolymer(s) and/or thermoplastic copolymer(s).

In a particular embodiment of the process of the first aspect of the invention, optionally in combination with any of the embodiments provided above or below, the thermoplastic homopolymer is made of one monomer unit selected from an olefin, a carbonate, an acrylate, an amide, a styrene, and an ester; more particularly, from the group consisting of ethylene, propylene, methylpentene, and butene-1. In a particular embodiment of the process of the first aspect of the invention, optionally in combination with any of the embodiments provided above or below, the thermoplastic copolymer is made of two or more monomer units selected from an olefin, a carbonate, an acrylate, an amide, a styrene, and an ester; more particularly, from the group consisting of ethylene, propylene, methylpentene, and butene-1.

In a particular embodiment of the first aspect of the invention, optionally in combination with any of the embodiments provided above or below, the thermoplastic matrix comprises one thermoplastic polymer, particularly a polyolefin, more particularly a polyolefin copolymer. In a particular embodiment of the first aspect of the invention, optionally in combination with any of the embodiments provided above or below, the thermoplastic matrix consists of one thermoplastic polymer, particularly a polyolefin, more particularly a polyolefin copolymer. In an even more particular embodiment of the first aspect of the invention, the polyolefin copolymer is a polyethylene or polypropylene copolymer.

The feather-based thermoplastic material produced by the process of the invention can be further improved by the addition of specific modifiers and/or additives. For instance, the resistance of the produced material against moisture or water, chemically aggressive environments, degradation by microorganisms (e.g., bacteria, fungi), and/or fire, can be improved by adding particular additives to the material during the process. Other characteristics of the products can be modified, such as their color, smell, conductivity, or mechanical properties, by the addition of particular modifiers. The skilled in the art would know which additive should be added depending on the characteristic of the material to be altered, and in which step of the process to add it, for example, a dye could be added before extrusion.

It is desirable to use additives that occur naturally, or which are derived directly from naturally occurring materials, and/or that are biodegradable (e.g., into carbon dioxide, water and, possibly, biomass) in composting or in other biological waste management processes. The skilled in the art knows, making use of their general knowledge and/or the instructions of the manufacturer when the different modifiers and additives can be added in the process. For instance, additives can be added together with the thermoplastic matrix or at different points of the extruder through intermediate feeders.

It can be advisable to perform a further drying step prior to the extrusion step in order to improve the characteristics of the final extruded material. The conditions of this further drying step can be routinary adjusted by the skilled in the art.

Thus, in a particular embodiment of the process of the first aspect of the invention, optionally in combination with any of the embodiments provided above or below, the process further comprises the step of drying the feather fragments, resulting from step (c), as well as the thermoplastic matrix before step (d). This drying step is carried out separately for the feather fragments and the thermoplastic matrix. In one embodiment of the process of the first aspect, this further drying step is performed immediately before step (d).

Again, as explained above, the time required to achieve the desired end moisture content depends, among others, on the feather material resulting from the explosion and the temperature of the drier. In an even more particular embodiment, the feather fragments are dried for 2 hours at 60 °C immediately before step (d). The time and temperature to dry the thermoplastic matrix before the extrusion will depend on the composition of the thermoplastic polymer(s) used. The skilled in the art will know how to dry each thermoplastic matrix by following manufacturer's protocol.

In another particular embodiment of the process of the first aspect of the invention, optionally in combination with any of the embodiments provided above or below, the moisture content of the feather fragments and the thermoplastic matrix before step (d) is equal to or lower than 30 % w/w, 29 % w/w, 28 % w/w, 27 % w/w, 26 % w/w, 25 % w/w, 24 % w/w, 23 % w/w, 22 % w/w, 21 % w/w, 20 % w/w, 19 % w/w, 18 % w/w, 17 % w/w, 16 % w/w, 15 % w/w, 14% w/w, 13 % w/w, 12 % w/w, 11 % w/w, 10 % w/w, 9 % w/w, 8 % w/w, 7 % w/w, 6 % w/w, 5 % w/w, 4 % w/w, 3 % w/w, 2 % w/w, 1 % w/w, 0.8 % w/w, 0. 6 % w/w, 0.4 % w/w, 0.2 % w/w, or 0.1 % w/w. Generally, it is advisable to reduce the moisture content of the feather fragments and the thermoplastic matrix to produce extruded materials with better properties.

The skilled in the art knows how to set the conditions of the steam explosion step depending on the type and conditions of the feathers used.

Thus, in a particular embodiment of the process of the first aspect of the invention, optionally in combination with any of the embodiments provided above or below, the steam applied to the feather is at a temperature of from 100 °C to 250 °C. In a more particular embodiment, the steam is at a temperature of from 150 °C to 220 °C. In an even more particular embodiment, the steam is at a temperature of 160 °C.

The required time will depend, among others, on the temperature of the steam and the nature of the feathers. Thus, in another particular embodiment of the process of the first aspect of the invention, optionally in combination with any of the embodiments provided above or below, during the steam explosion of step (a) the steam is applied at a temperature of from 100 °C to 250 °C for a period of time of from 10 sec to 2 h and at a pressure of from 0.1 MPa to 4 MPa. In a more particular embodiment, the steam is applied at temperature of from 150 °C to 220 °C for a period of time of from 1 min to 3 min at a pressure of from 0.47 MPa to 2.3 MPa. In an even more particular embodiment, during the steam explosion of step (a) the steam is applied for a period of time of 2 min at a temperature of 160 °C and at a pressure of 0.62 MPa.

In a particular embodiment of the process of the first aspect of the invention, optionally in combination with any of the embodiments provided above or below, the feather-based thermoplastic material comprises an amount of feather fragments from 0.1 % w/w to 60 % w/w. In a more particular embodiment, the feather-based thermoplastic material comprises an amount of feather fragments from 1 % w/w to 50 % w/w. In an even more particular embodiment, the feather-based thermoplastic material comprises an amount of feather fragments from 5 % w/w to 25 % w/w.

In a more particular embodiment of the process of the first aspect of the invention, the feather-based thermoplastic material comprises an amount of feather fragments from 0.1 % w/w to 60 % w/w and an amount of thermoplastic matrix from 40 % w/w to 99.9 % w/w, provided that the sum is equal to or lower than 100 % w/w. In a more particular embodiment, the feather-based thermoplastic material comprises an amount of feather fragments from 1 % w/w to 50 % w/w and an amount of thermoplastic matrix from 50 % w/w to 99 % w/w, provided that the sum is equal to or lower than 100 % w/w. In a more particular embodiment, the feather-based thermoplastic material comprises an amount of feather fragments from 5 % w/w to 25 % w/w and an amount of thermoplastic matrix from 75 % w/w to 95 % w/w, provided that the sum is equal to or lower than 100 % w/w.

In a more particular embodiment of the process of the first aspect of the invention, the feather-based thermoplastic material has an amount of fragmented feathers from 0.1 % w/w to 60 % w/w and an amount of thermoplastic matrix from 40 % w/w to 99.9 % w/w, provided that the sum is 100 % w/w. In a more particular embodiment, the feather-based thermoplastic material has an amount of fragmented feathers from 1 % w/w to 50 % w/w and an amount of thermoplastic matrix from 50 % w/w to 99 % w/w, provided that the sum is 100 % w/w. In an even more particular embodiment, the feather-based thermoplastic material has an amount of fragmented feathers from 5 % w/w to 25 % w/w and an amount of thermoplastic matrix from 75 % w/w to 95 % w/w, provided that the sum is 100 % w/w.

The skilled in the art will know which feather/polymer ratio should be used depending on the desired characteristics of the material.

As mentioned above, in a second aspect the present invention provides an extruded feather-based thermoplastic material obtainable by the process as defined in the first aspect. For the purposes of the invention the expressions "obtainable", "obtained" and equivalent expressions are used interchangeably, and in any case, the expression "obtainable" encompasses the expression "obtained". All the embodiments provided under the first aspect of the invention are also embodiments of the extruded feather-based thermoplastic material of the second aspect of the invention.

In a particular embodiment of the second aspect of the invention, optionally in combination with any of the embodiments provided above or below, the feather-based thermoplastic material obtainable by the process as defined in the first aspect comprises an amount of feather fragments from 0.1 % w/w to 60 % w/w. In a more particular embodiment of the second aspect, the feather-based thermoplastic material comprises an amount of feather fragments from 1 % w/w to 50 % w/w. In an even more particular embodiment of the second aspect, the feather-based thermoplastic material comprises an amount of feather fragments from 5 % w/w to 25 % w/w.

In a more particular embodiment of the second aspect of the invention, the feather-based thermoplastic material comprises an amount of feather fragments from 0.1 % w/w to 60 % w/w and an amount of thermoplastic matrix from 40 % w/w to 99.9 % w/w, provided that the sum is equal to or lower than 100 % w/w. In a more particular embodiment, the feather-based thermoplastic material comprises an amount of feather fragments from 1 % w/w to 50 % w/w and an amount of thermoplastic matrix from 50 % w/w to 99 % w/w, provided that the sum is equal to or lower than 100 % w/w. In an even more particular embodiment, the feather-based thermoplastic material comprises an amount of feather fragments from 5 % w/w to 25 % w/w and an amount of thermoplastic matrix from 75 % w/w to 95 % w/w, provided that the sum is equal to or lower than 100 % w/w.

In a more particular embodiment of the second aspect, the feather-based thermoplastic material has an amount of fragmented feathers from 0.1 % w/w to 60 % w/w and an amount of thermoplastic matrix from 40 % w/w to 99.9 % w/w, provided that the sum is 100 % w/w. In a more particular embodiment, the feather-based thermoplastic material has an amount of fragmented feathers from 1 % w/w to 50 % w/w and an amount of thermoplastic matrix from 50 % w/w to 99 % w/w, provided that the sum is 100 % w/w. In an even more particular embodiment, the feather-based thermoplastic material has an amount of fragmented feathers from 5 % w/w to 25 % w/w and an amount of thermoplastic matrix from 75 % w/w to 95 % w/w, provided that the sum is 100 % w/w.

The materials of the present invention, depending upon their final properties, may find application in various industries. They may, of course, be used in combination with other materials. For example, the feather-based materials of the invention may find use:
- As constructional materials in the building and construction industries, as well as in the furniture and cabinet-making industries.
- As bulk thermoplastic products, such as disposables, sheets, foils, webs, laminates, and films, for instance,
- For agricultural uses;
- As backing materials in floor coverings, such as carpets or carpet tiles;
- As roofing materials;
- As constructional materials for use in road building and the like;
- As insulation materials, for thermal, electrical and noise insulation purposes;
- As packaging materials such as, for example, bottles, snack-packs, crates, containers and the like;
- As cushion materials for protection purposes,
- As decorative items, e.g., desktops, plaques, store fixtures, wall tiles and the like;
- As extruded granulates for use as a raw material in, for instance, household materials, toys and the like.

Thus, as mentioned above, in a third aspect, the invention provides an article comprising a feather-based thermoplastic material as defined in the second aspect.

Throughout the description and claims the word "comprise" and variations of the word, are not intended to exclude other technical features, additives, components, or steps. Furthermore, the word "comprise" encompasses the case of "consisting of". Additional objects, advantages and features of the invention will become apparent to those skilled in the art upon examination of the description or may be learned by practice of the invention. The following examples are provided by way of illustration, and they are not intended to be limiting of the present invention. Furthermore, the present invention covers all possible combinations of particular and preferred embodiments described herein.

### Examples

### Feathers conditioning and treatment

Sanitized whole feathers were supplied by GRUPO SADA. Prior to extrusion feathers were either: 1) ground into fibers for comparative purposes (hereinafter referred as "ground feathers") or 2) treated by steam explosion process, according to the invention (hereinafter referred as "SE treated feathers").

Grinding of feathers was carried out using a *FRITSCH Universal Cutting Mill PULVERISETTE* 19 using 1 mm sieve size. The fragment size distribution of the resulting ground feathers, understood as the length of the feathers, was determined by using a Carl Zeiss Ultra Plus field-emission scanning electron microscope (FE-SEM, Oberkochen, Germany) equipped with an energy dispersive X-ray spectrometer (EDXS). Prior to FE-SEM analysis, samples were vacuum-coated with gold at 10-1mBar using argon atmosphere in a BAL-TEC SCD 005 sputter coater at 65mA for 10 seconds. Values ranging from 200 µm to 1mm were obtained. Apparent density, determined by the ratio of the feather mass (expressed in grams) to a given volume (expressed in cm³), of these feathers was 0.07 g/cm³.

SE treated feathers were obtained using the following procedure: the steam explosion of feathers was performed in a custom build batch reactor (constructed by ORNALP UNOZON) consisting of a steam generator, an automated control system, a 40 L jacketed reactor (maximal operational pressure 3.0 MPa) and a 1.23 m³ collection tank. The heating media for the reactor was steam and separate heating of the jacket and the reactor chamber was possible. Whole feathers were put into the reactor chamber and the jacket was heated to approx. 20 °C below target temperature for the steam explosion reaction. As the jacket reached its temperature (i.e., a temperature 20 °C below the reaction temperature) the feathers were treated with saturated steam for 2 min at four different temperatures: 160, 180, 200 and 220 °C. The reaction was terminated by rapid decompression by opening of a bottom valve and ejecting the feathers into the collection vessel. The exploded material was dried in an oven at 105°C during 8 hours and then ground with a hammer mill (Hosokawa 100 UPZ, plate beater) with different mesh sizes ranging from 0.1-0.5 mm. SE treated feathers had a fiber size distribution ranging from 5 µm to 500 µm determined by using a Carl Zeiss Ultra Plus field-emission scanning electron microscope (FE-SEM, Oberkochen, Germany) as explained above. Apparent density of SE treated feathers, determined by the ratio of the mass to a given volume, was 0.40 g/cm³.

### Extrusion for feather-based material manufacturing

The melt compounding of both feather samples (ground feathers and SE treated feathers) with the thermoplastic matrix was carried out by extrusion process. Prior to the extrusion, feathers and the corresponding thermoplastic matrix were dried in a dehumidifying drier Moretto D3T from MTP Maquinaria Termoplástica S.L. Treated feathers were dried for 2 hours at 60°C, while thermoplastic matrix used was dried in each case following the instructions provided by the supplier in the datasheet of the product.

The extruder used in the melt compounding was a co-rotating twin-screw extruder (Process 11, Thermo Scientific) with an L/D ratio of 40. Feeding of the materials into the extruder was done using volumetric feeders. A 3 mm of diameter nozzle was used. Following the extrusion process, the extrudate was then cooled in a water bath, dried with air, and pelletized.

This general procedure was used to prepare different bio-composites varying the polymer matrix, the temperature profile according to the selected matrix, the treated feather content, and the rotational speed during the extrusion.

### Example 1: Extrusion of Polypropylene (PP) based bio-composites with ground feathers (for comparative purposes)

Polypropylene copolymer SABIC^{®} PP 56M10, previously dried at 90 °C for 1.5 hours, was used for the preparation of bio-composites using ground feathers. For this purpose, feathers were placed into the extruder feeder and tried to be fed. The temperature profile from the feeding point to the die was the following: 30, 180, 185, 190, 185, and 180 °C. As shown in the Table 1 below, due to the low density of this kind of filler, the amount of ground feathers that can be fed into the extruder is limited and heterogeneous.

**Table 1**

| **Feeding rate (rpm)** | **Filler content (% w/w) at 5 minutes of extrusion** | **Filler content (% w/w) at 15 minutes of extrusion** | **Filler content (% w/w) at 30 minutes of extrusion** | **Remarks** |
|---|---|---|---|---|
| 5 | 9 | 3 | 15 | No homogeneous incorporation of ground feathers |
| 10 | 12 | 17 | 4 | No homogeneous incorporation of ground feathers |
| 30 | Get stuck in the hoper, no possible to be fed | Get stuck in the hoper, no possible to be fed | Get stuck in the hoper, no possible to be fed | |

Even if a certain amount of ground feathers that can be fed to the extruder, the extruder has problems for conveying them depending on the percentage of feathers that is desired in the thermoplastic material. Thus, the amount of ground feathers that can be added is very limited.

### Example 2: Extrusion of Polypropylene (PP) based bio-composites with SE treated feathers (according to the invention)

Polypropylene copolymer SABIC^{®} PP 56M10, previously dried at 90 °C during 1.5 hours was used for the preparation of bio-composites using SE treated feathers at four different conditions of treatment (i.e., steam explosion temperatures): 160, 180, 200 and 220 °C. Processed feathers were also dried at 60 °C before extrusion.

The temperature profile from the feeding point to the die was the following: 30, 180, 185, 190, 185, and 180 °C. The rotational speed used in the extrusion was 150 rpm.

Feathers treated at 160 °C were used for the preparation of four different concentrations of feather in the final bio-compound: 5, 10, 20, and 30 % wt. SE treated feathers were successfully fed into the extruder for all the concentrations and conditions.

In conclusion, these results demonstrate that feathers processed by steam explosion at a broad range of temperatures can be successfully fed into the extruded, even at high concentrations, allowing a homogeneous incorporation of the processed feathers into the thermoplastic matrix.

### Example 3: Extrusion of Polyethylene (PE) based bio-composites with SE treated feathers (according to the invention).

Bio-composites based on High density polyethylene (HDPE) SABIC^{®} HDPE P4200RT, previously dried 2 hours at 90°C, and SE treated feathers at 180 °C were prepared by extrusion. According to the thermal properties of the polymer the temperature profile used was the following from feeding to die: 30, 125, 125, 130, 130 and 125 °C. The rotational speed used in the extrusion was 220 rpm.

Different amounts of treated feathers were fed to prepare three different concentrations of feathers in the final bio-compound: 25, 35, and 50 % wt. SE treated feathers were successfully fed for all the concentrations. Therefore, these results show that the process of the invention allows the incorporation of feathers into various types of thermoplastic polymers.

The results of the different examples are summarized in the following Table 2:

**Table 2**

| Example | Feather treatment | Extrusion |
|---|---|---|
| 1 (comparative) | Grinding | No possible or inhomogeneous feeding of feathers |
| 2 (invention) | Steam explosion+grinding+drying | Possible and homogenous feeding of feathers |
| 3 (invention) | Steam explosion+grinding+drying | Possible and homogenous feeding of feathers |

## Claims

1. Process for the production of a feather-based thermoplastic material comprising the following steps in the specified order:
(a) subjecting feathers to steam explosion,
(b) drying the exploded feathers resulting from step (a),
(c) fragmenting the dried feathers resulting from step (b), and
(d) incorporating by extrusion the feather fragments resulting from step (c) into a thermoplastic matrix.

2. The process according to claim 1, wherein the dried feathers resulting from step (b) contain a moisture content equal to or lower than 30 % w/w.

3. The process according to any of claims 1-2, wherein the feather fragments resulting from step (c) have a fragment size from 1 µm to 5 mm.

4. The process according to any of claims 1-3, wherein the fragmenting step (c) consists on grinding the exploded feathers resulting from step (b).

5. The process according to any of claims 1-4, wherein the thermoplastic matrix comprises one or more thermoplastic homopolymers and/or thermoplastic copolymers.

6. The process according to claim 5, wherein the one or more thermoplastic copolymers are made of two or more monomer units selected from an olefin, a carbonate, an acrylate, an amide, a styrene, and an ester.

7. The process according to any of claim 5-6, wherein the one or more thermoplastic copolymers are made of two or more monomer units selected from ethylene, propylene, methylpentene, and butene-1.

8. The process according to any of claims 1-7, wherein the feathers are from chicken, turkey, pigeon, dove, duck, geese, pheasant, waterfowl, emu, Guinea fowl, ostrich, quail, or mixtures thereof, more particularly, the feathers are from chicken.

9. The process according to any of claims 1-8, wherein the steam explosion of step (a) is carried out at a temperature of from 100 °C to 250 °C for a period of time of from 10 sec to 2 h and at a pressure of from 0.1 MPa to 4 MPa.

10. The process according to claim 9, wherein the steam explosion of step (a) is carried out at a temperature of from 150 °C to 220 °C for a period of time of from 1 min to 3 min and at a pressure of from 0.47 MPa to 2.3 MPa, more particularly, at a temperature of 160 °C for a period of time of 2 min and at a pressure of 0.62 MPa.

11. The process according to any of claims 1-10, wherein the extrusion of step (d) is carried out with a twin-screw extruder.

12. The process according to any of claims 1-11, wherein the process further comprises the step of drying the feather fragments resulting from step (c) as well as the thermoplastic matrix before performing step (d),
wherein the moisture content of the fragmented feather particles and the thermoplastic matrix after this further drying step is equal to or lower than 30 % w/w.

13. The process according to any of claims 1-12, wherein the feather-based thermoplastic material comprises an amount of fragmented feather particles from 0.1 % w/w to 60 % w/w.

14. An extruded feather-based thermoplastic material obtainable by the process as defined in any of claims 1-13.

15. An article comprising an extruded feather-based thermoplastic material as defined in claim 14.

## Patentansprüche

1. Verfahren zur Herstellung eines thermoplastischen Materials auf Federbasis, umfassend die folgenden Schritte in der angegebenen Reihenfolge:
(a) Aussetzen von Federn einem Dampfexplosionsverfahren,
(b) Trocknen der explodierten Federn aus Schritt (a),
(c) Zerkleinern der getrockneten Federn aus Schritt (b) und
(d) Einbringen der aus Schritt (c) resultierenden Federfragmente in eine thermoplastische Matrix durch Extrusion.

2. Das Verfahren nach Anspruch 1, wobei die getrockneten Federn, die aus Schritt (b) resultieren, einen Feuchtigkeitsgehalt von gleich oder weniger als 30 Gew.- % enthalten.

3. Das Verfahren nach einem der Ansprüche 1 bis 2, wobei die Federfragmente, die aus Schritt (c) resultieren, eine Fragmentgröße von 1 µm bis 5 mm haben.

4. Das Verfahren nach einem der Ansprüche 1 bis 3, wobei der Fragmentierungsschritt (c) in dem Mahlen der explodierten Federn, die aus Schritt (b) resultieren, besteht.

5. Das Verfahren nach einem der Ansprüche 1 bis 4, wobei die thermoplastische Matrix ein oder mehrere thermoplastische Homopolymere und/oder thermoplastische Copolymere umfasst.

6. Das Verfahren nach Anspruch 5, wobei das eine oder die mehreren thermoplastischen Copolymere aus zwei oder mehr Monomereinheiten hergestellt sind, die ausgewählt sind aus einem Olefin, einem Carbonat, einem Acrylat, einem Amid, einem Styrol und einem Ester.

7. Das Verfahren nach einem der Ansprüche 5 bis 6, wobei das eine oder die mehreren thermoplastischen Copolymere aus zwei oder mehr Monomereinheiten hergestellt sind, die aus Ethylen, Propylen, Methylpenten und Buten-1 ausgewählt sind.

8. Das Verfahren nach einem der Ansprüche 1 bis 7, wobei die Federn von Hühnern, Truthähnen, Tauben, weißen Tauben, Enten, Gänsen, Fasanen, Wasservögeln, Emus, Perlhühnern, Straußen, Wachteln oder Mischungen davon stammen, wobei die Federn insbesondere von Hühnern stammen.

9. Das Verfahren nach einem der Ansprüche 1 bis 8, wobei die Dampfexplosion von Schritt (a) bei einer Temperatur von 100 °C bis 250 °C für einen Zeitraum von 10 s bis 2 h und bei einem Druck von 0,1 MPa bis 4 MPa durchgeführt wird.

10. Das Verfahren nach Anspruch 9, wobei die Dampfexplosion von Schritt (a) bei einer Temperatur von 150 °C bis 220 °C für einen Zeitraum von 1 min bis 3 min und bei einem Druck von 0,47 MPa bis 2,3 MPa, insbesondere bei einer Temperatur von 160 °C für einen Zeitraum von 2 min und bei einem Druck von 0,62 MPa durchgeführt wird.

11. Das Verfahren nach einem der Ansprüche 1 bis 10, wobei die Extrusion von Schritt (d) mit einem Doppelschneckenextruder durchgeführt wird.

12. Das Verfahren nach einem der Ansprüche 1 bis 11, wobei das Verfahren weiterhin den Schritt des Trocknens der Federfragmente, die aus Schritt (c) resultieren, sowie der thermoplastischen Matrix vor dem Durchführen von Schritt (d) umfasst,
wobei der Feuchtigkeitsgehalt der fragmentierten Federpartikel und der thermoplastischen Matrix nach diesem weiteren Trocknungsschritt gleich oder kleiner als 30 Gew.- % ist.

13. Das Verfahren nach einem der Ansprüche 1 bis 12, wobei das thermoplastische Material auf Federbasis eine Menge an fragmentierten Federpartikeln von 0,1 Gew.- % bis 60 Gew.- % umfasst.

14. Ein extrudiertes thermoplastisches Material auf Federbasis, das durch das Verfahren wie in einem der Ansprüche 1 bis 13 definiert erhalten werden kann.

15. Ein Artikel umfassend ein extrudiertes thermoplastisches Material auf Federbasis, wie in Anspruch 14 definiert.

## Revendications

1. Procédé de fabrication d'un matériau thermoplastique à base de plumes comprenant les étapes suivantes dans l'ordre spécifié :
(a) soumettre les plumes à une explosion de vapeur ;
(b) sécher les plumes éclatées résultant de l'étape (a),
(c) fragmenter les plumes séchées résultant de l'étape (b), et
(d) incorporer par extrusion les fragments de plumes résultant de l'étape (c) dans une matrice thermoplastique.

2. Le procédé selon la revendication 1, dans lequel les plumes séchées résultant de l'étape (b) contiennent une teneur en humidité égale ou inférieure à 30 % en poids/poids.

3. Le procédé selon l'une quelconque des revendications 1 à 2, dans lequel les fragments de plumes résultant de l'étape (c) ont une taille de fragments de 1 µm à 5 mm.

4. Le procédé selon l'une quelconque des revendications 1 à 3, dans lequel l'étape de fragmentation (c) consiste à broyer les plumes éclatées résultant de l'étape (b).

5. Le procédé selon l'une quelconque des revendications 1 à 4, dans lequel la matrice thermoplastique comprend un ou plusieurs homopolymères et/ou copolymères thermoplastiques.

6. Le procédé selon la revendication 5, dans lequel le ou les copolymères thermoplastiques sont constitués de deux unités monomères ou plus choisies parmi une oléfine, un carbonate, un acrylate, un amide, un styrène et un ester.

7. Le procédé selon l'une quelconque des revendications 5 à 6, dans lequel le ou les copolymères thermoplastiques sont constitués de deux unités monomères ou plus choisies parmi l'éthylène, le propylène, le méthylpentène et le butène-1.

8. Le procédé selon l'une quelconque des revendications 1 à 7, dans lequel les plumes proviennent de poulet, de dinde, de pigeon, de colombe, de canard, d'oie, de faisan, de sauvagine, d'émeu, de pintade, d'autruche, de caille ou de mélanges de ceux-ci, plus particulièrement, les plumes proviennent de poulet.

9. Le procédé selon l'une quelconque des revendications 1 à 8, dans lequel l'explosion de vapeur de l'étape (a) est effectuée à une température de 100 °C à 250 °C pendant une période de temps de 10 s à 2 h et à une pression de 0,1 MPa à 4 MPa.

10. Le procédé selon la revendication 9, dans lequel l'explosion de vapeur de l'étape (a) est effectuée à une température de 150 °C à 220 °C pendant une période de temps de 1 min à 3 min et à une pression de 0,47 MPa à 2,3 MPa, plus particulièrement, à une température de 160 °C pendant une période de temps de 2 min et à une pression de 0,62 MPa.

11. Le procédé selon l'une quelconque des revendications 1 à 10, dans lequel l'extrusion de l'étape (d) est effectuée avec une extrudeuse à deux vis.

12. Le procédé selon l'une quelconque des revendications 1 à 11, dans lequel le procédé comprend en outre l'étape de séchage des fragments de plumes résultant de l'étape (c) ainsi que de la matrice thermoplastique avant d'effectuer l'étape (d),
dans lequel la teneur en humidité des particules de plumes fragmentées et de la matrice thermoplastique après cette étape de séchage supplémentaire est égale ou inférieure à 30 % en poids.

13. Le procédé selon l'une quelconque des revendications 1 à 12, dans lequel le matériau thermoplastique à base de plumes comprend une quantité de particules de plumes fragmentées de 0,1 % en poids à 60 % en poids.

14. Un matériau thermoplastique extrudé à base de plumes pouvant être obtenu par le procédé tel que défini dans l'une quelconque des revendications 1 à 13.

15. Un article comprenant un matériau thermoplastique extrudé à base de plumes tel que défini dans la revendication 14.
